Europäisches Patentamt

(19) European Patent Office

Office européen des brevets

(11) Publication number: **0 132 270**
**B1**

(12) # EUROPEAN PATENT SPECIFICATION

(45) Date of publication of the patent specification:
**23.07.86**

(51) Int. Cl.⁴: **F 16 D 1/08**

(21) Application number: **84900544.2**

(22) Date of filing: **10.01.84**

(86) International application number:
**PCT/SE 84/00002**

(87) International publication number:
**WO 84/02756 (19.07.84 Gazette 84/17)**

(54) **DEVICE FOR AXIALLY AND TANGENTIALLY CLAMPING AN OBJECT ON A SHAFT.**

(30) Priority: **11.01.83 SE 8300088**

(43) Date of publication of application:
**30.01.85 Bulletin 85/5**

(45) Publication of the grant of the patent:
**23.07.86 Bulletin 86/30**

(84) Designated Contracting States:
**AT BE CH DE FR GB LI LU NL SE**

(56) References cited:
**CH-A-582 314**
**DE-A-2 023 316**
**DE-A-2 424 262**
**US-A-2 890 071**

(73) Proprietor: **GACIA, Tadeusz, Grönvägen 5 E, S-232 00 Arlöv (SE)**

(72) Inventor: **GACIA, Tadeusz, Grönvägen 5 E, S-232 00 Arlöv (SE)**

(74) Representative: **Rostovanyi, Peter, AWAPATENT AB Box 5117, S-200 71 Malmö (SE)**

## Description

The invention relates to a device for axially and tangentially clamping an object on a shaft, said device comprising a slit inner sleeve adapted to be mounted on the shaft and having a conical portion; an outer sleeve having a conical portion cooperating with the conical portion of the inner sleeve; and locking members for displacing the sleeves relative to one another and thus allowing axial and tangential clamping of the sleeves on the shaft (CH-A-582 314).

The invention aims at providing a device for clamping, on a shaft, an object of varying thickness and material, for example a chain wheel, belt pulley, gear wheel, or cam disk, such that the object is clamped by friction both axially and non-rotatably on the shaft.

Furthermore, the invention aims at providing a device of the type mentioned by way of introduction, combined with a sliding coupling.

According to the invention, this is achieved by means of a device of the type mentioned by way of introduction, and having the characteristic features stated in the appended claims.

The invention will be described in detail below, reference being made to the accompanying drawings illustrating four embodiments,

Fig. 1 is a lateral view, partly in section, of a first embodiment of the device according to the invention, an object being mounted on the device,

Fig. 2 is a front view of a second embodiment of the device according to the invention,

Fig. 3 is a lateral view, partly in section, of the device shown in Fig. 2, an object being mounted on the device,

Fig. 4 is a first embodiment of a sliding coupling included in the device according to the invention,

Fig. 5 is a second embodiment of a sliding coupling.

Fig. 6 is a part section along line VI-VI in Fig. 5.

Fig. 7 is a modification of the embodiment in Fig. 1.

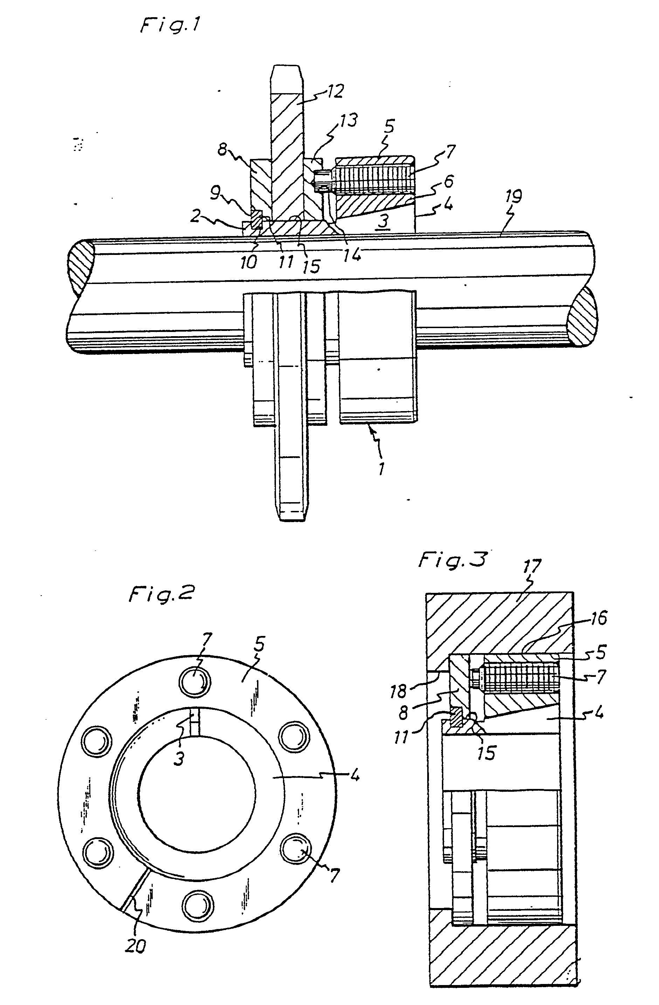

Fig. 1 shows a device 1 according to a first embodiment of the invention. The device comprises an inner sleeve 2 having a cylindrical portion 15 to support an object 12 which is to be clamped, and a conical portion 4 cooperating with an outer sleeve 5. The cylindrical portion 15 serves to centre and hold the object on a shaft 19, while the conical portion which is formed with one or more slots 3 (only one slot shown), serves to clamp the inner sleeve on the shaft 19 by cooperation with the outer sleeve 5, The outer sleeve 5 has a conical portion 6 cooperating with the conical portion 4 of the inner sleeve 2 and a number of threaded, axial bores distributed circumferentially on the sleeve for holding clamping screws 7.

Clamping the object 12 on the shaft 19 is done in the following manner, First, a clamping washer 13 is mounted on the cylindrical portion 15 of the inner sleeve 2. Then the object 12 and a counter-washer 8 are mounted on this cylindrical portion, the object being placed between the clamping washer 13 and the counter-washer 8. The counter-washer 8 and the inner sleeve 2 each have an annular groove 9 and 10, respectively, for holding a one-part or two-part lock ring 11, The clamping screws 7, when tightened, press the object 12 against the counter-washer 8 which is axially locked by means of the lock ring 11 in that the outer sleeve 5 tries to "climb" the conical portion 4 of the inner sleeve, Since this conical portion is provided with a slot 3, it is radially compressed and clamped on the shaft 19. This clamping is achieved by means of a force, the moment arm of which is extending between the clamping washer 13 and the conical portion 4 of the inner sleeve, The axially directed force exerted by each clamping screw 7 on the clamping washer 13 effects tangential clamping of the object 12, that is to say the object is non-rotatably mounted on the device 1. A great advantage of this arrangement is that the object 12 may be set in the correct axial position before clamping by means of the clamping screws 7. The clamping washer 13 has openings for receiving the clamping screws 7.

Fig. 2 shows a second embodiment of the invention, having great resemblance to the first embodiment, but here also the outer sleeve is formed with a slot 20. Like reference numerals apply to similar parts in Fig. 1.

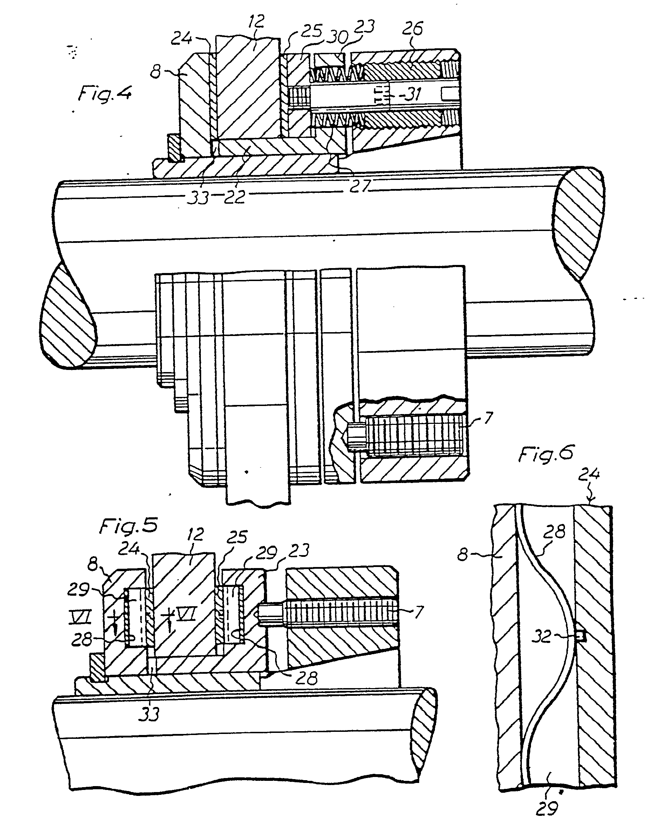

Fig. 3 shows a lateral view of the device in Fig. 2, an object 17 being centred on the outer sleeve 5 having a cylindrical, outer surface 16. The object has, in this case, an annular shoulder 18 engaging with the counter-washer 8, In this embodiment, the cylindrical portion 15 of the inner sleeve has been made shorter, and there is no clamping washer 13.

The shoulder 18 may be replaced by an annular groove in the object 17 and a lock ring inserted in the groove.

Clamping the object 17 is done in the following manner. When the clamping screws 7 press the counterwasher 8 against the lock ring 11, the outer sleeve 5 tries to "climb" the conical portion 4 of the inner sleeve and, by means of the above-mentioned momental force, to press the conical portion of the inner sleeve against the shaft. Both the outer sleeve and the inner sleeve having slots 20 and 3, respectively, the outer sleeve will be slightly displaced radially outwardly towards the object. The outer sleeve will therefore, engage with the object 17, and since the outer sleeve is displaced to some extent also in the axial direction, the outer sleeve will, by means of friction engagement, press, via the shoulder 18, the object against the counter-washer 8. In this manner, both axial and tangential clamping of the object 17 is achieved.

The embodiment in Fig. 4 corresponds to the embodiment in Fig. 1, although a sliding coupling has been added to allow the object to be rotated relatively to the shaft, when a given tangential force on the object is exceeded. The sliding coupling consists of friction linings 24 and 25 on the counter-washer 8 and on a washer 30, respectively. A counter-sleeve is slidable on the cylindrical portion 15 of the inner sleeve, and a cylindrical portion 22 of the counter-sleeve is adapted to engage with the counter-washer via a jaw clutch 33 such that the counter-sleeve, when sliding, is not taken along by the object. The jaw clutch comprises a number of projections formed on the counter-washer and engaging with corresponding recesses in the end of the cylindrical portion 22 of the counter-sleeve, A radial flange 23 on the counter-sleeve has a number of through holes in its circumference for receiving a spring assembly 27 as described below and, between these holes, borings for receiving the clamping screws 7. The inner sleeve is clamped on the shaft in the same manner as before, by tightening the clamping screws, allowing the cylindrical flange on the counter-sleeve to engage with the counter-washer 8 to build up the above mentioned momental force, In this embodiment, the cylindrical portion 22 holds the object.

Between the clamping screws on the outer sleeve threaded through borings are provided, each adapted to receive a bias sleeve 26 operable from the side of the outer sleeve facing away from the object 12. The friction lining 25 is mounted on a washer 30 and a spring assembly is clamped between each bias sleeve 26 and the washer via the corresponding through holes in the radial flange 23 of the counter-sleeve. In this embodiment, each spring assembly consists of a number of cup springs connected in series on a positioning pin 31, one end of which is slidable in the bias sleeve, while the other end is mounted in a hole in the washer, Other types of spring arrangements are possible, e.g. helical springs. Tightening the clamping screws 7 will result in a clamping of the inner and outer sleeves 2, 5 on the shaft, and rotating the bias sleeve 26 will result in a predetermined locking of the object between the friction linings 24, 25.

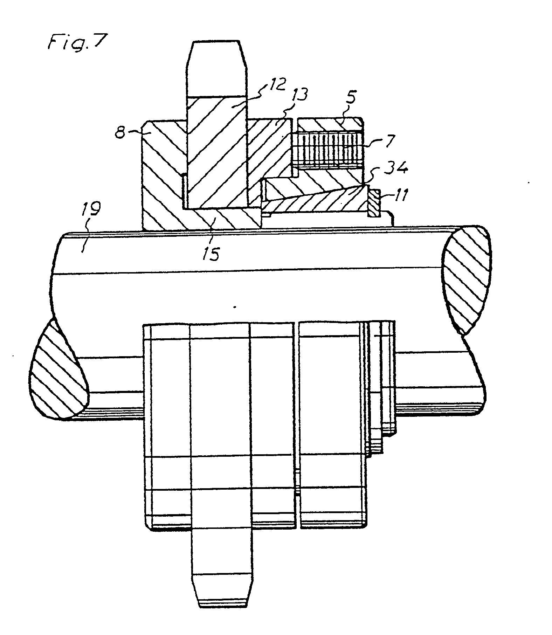

Fig. 5 shows another type of sliding coupling which does not have the washer, the bias sleeve and the spring assembly but, instead, annular grooves 29 formed opposite one another in the stop member 8 and the radial flange 23 on the counter-sleeve, respectively, Sinusoidal leaf springs 28 are clamped in the grooves between the bottom of the groove and the respective friction lining, In this embodiment, the clamping screws engage directly with the radial flange 23 on the counter-sleeve. This embodiment is intended for minor objects and, thus, minor forces.

Fig. 6 shows the position of one spring 28 in its groove 29, the spring being provided, at its points of contact with the rear side of the friction lining 24, with pins 32 which engage with the corresponding recesses in the friction lining for locking it to the stop member 8. Also other types of locking between the friction lining and the leaf springs may be used.

Fig. 7 shows a device for front mounting on a shaft end. Compared to Fig. 1, the stop member 8 is made in one piece with the cylindrical portion 15 of the inner sleeve, The conical portion of the inner sleeve consists of a separate ring 34, mounted on the slit part of the sleeve and having a conical outer surface, cooperating with the conical surface of the outer sleeve 5 when the sleeves are clamped on the shaft and the object is locked on the cylindrical portion of the inner sleeve. The lock ring 11 is placed on the slit part of the inner sleeve and is easily accessible from the shaft end. In this manner, it is possible, without removal of the inner sleeve, to exchange the outer sleeve, the conical ring 34, the clamping washer 13 and the object 12, after the lock ring has been removed from the inner sleeve. To release the connection between the conical ring 34 and the outer sleeve 5, use is made of a dismounting device consisting of at least two diametical holes (not shown) in the outer sleeve, corresponding to threaded holes in the clamping washer 13, and screws insertable in these holes. When these screws are screwed into the threaded holes via the holes in the outer sleeve, the outer sleeve is drawn against the object and disengaged from the conical ring 34 which after removal of the lock ring 11 can easily be taken off.

**Claims**

1. Device for axially and tangentially clamping an object (12; 17) on a shaft (19), said device comprising a slit inner sleeve (2) adapted bo be mounted on the shaft and having a conical portion (4, 34); an outer sleeve (5) having a conical portion (6) cooperating with the conical portion of the inner sleeve; and locking members (7, 13; 7, 8; 7, 22-27; 7, 22-25, 28, 29) for displacing the sleeves relative to one another and thus allowing axial and tangential clamping of the sleeves on the shaft, characterised in that the inner sleeve (2) has an axial, cylindrical portion (15), next to the conical portion, to receive a stop member (8) which can be axially locked at least in a direction away from the conical portion (4) of the inner sleeve, and to which cylindrical portion (15) the object (12; 17) to be clamped is connected; and that the locking members (7, 13; 7, 8; 7, 22-27; 7, 22-25, 28, 29) are adapted to press directly and/or via the object against the stop member for axially and tangentially clamping the object on the inner sleeve and for simultaneously providing, by means of a momental force, the said clamping of the sleeves.

2. Device as claimed in claim 1, characterised in that the locking members comprise a number of axially directed clamping screws (7) in the outer sleeve (5).

3. Device as claimed in claim 2, characterised by a clamping washer (13), slidable on the cylindrical portion (15) of the inner sleeve (2) and adapted, upon tightening of the clamping screws, to be displaced against and lock the object (12) against the stop member (8).

4. Device as claimed in claim 2, characterised in that also the outer sleeve (5) is formed with a slot (20) and has a cylindrical portion (16) which is adapted to support the object (17) and, upon relative displacement of the sleeves (2, 5) for axially and tangentially clamping the object, to actuate the object by means of an axially directed momental force, an annular shoulder (18) on the object being pressed against the side of the stop member (8) facing away from the outer sleeve.

5. Device as claimed in claim 2, characterised in that the locking members further comprise a counter-sleeve having an axial, cylindrical flange (22) slidable on the cylindrical portion (15) of the inner sleeve (2) for engagement with the stop member (8), and having a radial flange (23); friction linings (24,25) arranged on either side of the object (12); and spring-loading means (26, 27; 28) adapted to be biased by the outer sleeve and further adapted, upon tightening of the clamping screws (7), to cause tangentially locking which allows sliding when a given tangential force on the object is exceeded; and that the clamping screws are adapted to engage with the radial flange and to press the counter-sleeve against the stop member (8) to build up said momental force.

6. Device as claimed in claim 5, characterised in that the spring-loading means comprise at least one bias sleeve (26) axially slidable in the outer sleeve, and a spring assembly (27) insertable between one friction lining (25) and the bias sleeve and extending through the radial flange (23) on the bias sleeve, the bias of the spring-loading means being controlled by means of the bias sleeve.

7. Device as claimed in claim 5, characterised in that the spring-loading means comprise sinusoidal leaf springs (28) each clamped in an annular groove (29) in the stop member (8) and in the radial flange (23) of the counter-sleeve, respectively, between the respective friction lining (24, 25) and the stop member/flange.

**Patentansprüche**

1. Vorrichtung zum axialen und tangentialen Befestigen eines Gegenstands (12; 17) auf einer Achse (19), umfassend eine geschlitzte, auf der Achse zu montierende Innenhülse (2) mit einem konischen Teil (4, 34); eine Aussenhülse (5) mit einem konischen, mit dem konischen Teil der Innenhülse zusammenwirkenden Teil (6); und Festhaltemittel (7, 13; 7, 8; 7, 22-27; 7, 22-25; 28, 29) zum gegenseitigen Verschieben der Hülsen und somit axialen und tangentialen Befestigen der Hülsen auf der Achse, dadurch gekennzeichnet, dass die Innenhülse (2) neben ihrem konischen Teil einen axialen, zylindrischen Teil (15) zur Aufnahme eines Sperrglieds (8) aufweist, das zumindest in der Richtung weg vom konischen Teil (4) der Innenhülse axial verriegelt werden kann, und welchem zylindrischen Teil (15) der zu befestigende Gegenstand (12; 17) angegliedert ist; und dass die Festhaltemittel (7, 13; 7, 8; 7, 22-27; 7, 22-25, 28, 29) derart angeordnet sind, dass sie direkt und/oder über den Gegenstand gegen das Sperrglied drücken, um den Gegenstand axial und tangential auf der Innenhülse zu befestigen und gleichzeitig die Hülsen mit einer Momentkraft zu befestigen.

2. Vorrichtung nach Anspruch 1, dadurch gekennzeichnet, dass die Festhaltemittel eine Anzahl axial eingerichteter Spannschrauben (7) in der Aussenhülse (5) aufweisen.

3. Vorrichtung nach Anspruch 2, gekennzeichnet durch eine auf dem zylindrischen Teil (15) der Innenhülse (2) verschiebbare Spannscheibe (13), die beim Anziehen der Spannschrauben gegen den Gegenstand (12) verschoben wird und ihn gegen das Sperrglied (8) verriegelt.

4. Vorrichtung nach Anspruch 2, dadurch gekennzeichnet, dass auch die Aussenhülse (5) mit einem Schlitz (20) ausgebildet ist und einen zylindrischen Teil (16) aufweist, der den Gegenstand (17) trägt und, wenn die Hülsen (2, 5) zum axialen und tangentialen Befestigen des Gegenstands im Verhältnis zueinander versetzt werden, auf den Gegenstand mittels einer axial gerichteten Momentkraft einwirkt, wobei ein ringförmiger Ansatz (18) des Gegenstands gegen die von der Aussenhülse abgewandte Seite des Sperrglieds (8) gepresst ist.

5. Vorrichtung nach Anspruch 2, dadurch gekennzeichnet, dass die Festhaltemittel ausserdem umfassen: eine Gegenhülse mit einem axialen, zylindrischen Flansch (22), der zum Eingriff mit dem Sperrglied (8) auf dem zylindrischen Teil (15) der Innenhülse (2) verschiebbar ist, und einem radialen Flansch (23); auf beiden Seiten des Gegenstands (12) angeordnete Reibungsbeläge (24, 25); und ein mittels der Aussenhülse vorgespanntes Federbelastungsmittel (26, 27; 28), das beim Anziehen der Spannschrauben (7) ein tangentiales Befestigen zustande bringt, welches beim Überschreiten einer gewissen tangentialen Kraft auf den Gegenstand ein Gleiten zulässt; und dass die Spannschrauben mit dem radialen Flansch eingreifen und die Gegenhülse gegen das Sperrglied (8) pressen, um die genannte Momentkraft aufzubauen.

6. Vorrichtung nach Anspruch 5, dadurch gekennzeichnet, dass das Federbelastungsmittel zumindest eine in der Aussenhülse axial verschiebbare Vorspannungshülse (26) und eine Federanordnung (27) umfasst, die zwischen dem einen Reibungsbelag (25) und der Vorspannungshülse einspannbar ist und sich durch den radialen Flansch (23) der Vorspannungshülse erstreckt, wobei die Vorspannung des Federbelastungsmittels mit Hilfe der Vorspannungshülse geregelt wird.

7. Vorrichtung nach Anspruch 5, dadurch gekennzeichnet, dass das Federbelastungsmittel sinusförmige Blattfedern (28) umfasst, welche in je einer ringförmigen Nut (29) im Sperrglied (8) bzw. im radialen Flansch (23) der Gegenhülse zwischen dem jeweiligen Reibungsbelag (24, 25) und dem Sperrglied/Flansch eingespannt sind.

## Revendications

1 - Dispositif pour fixer un objet (12; 17) sur un arbre (19) dans les directions axiale et tangentielle, ledit dispositif comprenant un manchon intérieur fendu (2) adapté pour être monté sur l'arbre et possédant une partie conique (6) qui coopère avec la partie conique du manchon intérieur; et des organes de blocage (7, 13; 7, 8; 7, 22 à 27; 7, 22 à 25, 28, 29) servant à déplacer les manchons l'un par rapport à l'autre et permettant de cette façon de bloquer les manchons sur l'arbre dans les directions axiale et tangentielle, caractérisé en ce que le manchon intérieur (2) possède une partie axiale cylindrique (15), qui fait suite à la partie conique, pour recevoir un élément de butée (8) qui peut être bloqué axialement au moins dans le sens qui s'éloigne de la partie conique (4) du manchon intérieur et à laquelle partie cylindrique (15) l'objet (12; 17) à fixer est relié, et en ce que les éléments de blocage (7, 13; 7, 8; 7, 22 à 27; 7, 22 à 25, 28, 29) sont adaptés pour exercer une pression contre l'élément de butée, directement et/ou à travers l'objet, pour fixer l'objet sur le manchon intérieur dans les directions axiale et tangentielle et pour assurer simultanément ledit blocage des manchons par l'action d'un moment de force.

2 - Dispositif selon la revendication 1, caractérisé en ce que les éléments de blocage comprennent un certain nombre de vis de serrage (7) orientées axialement, montées dans le manchon extérieur (5).

3 - Dispositif selon la revendication 2, caractérisé par une rondelle de serrage (13) qui peut coulisser sur la partie cylindrique (15) du manchon intérieur (2) et est adaptée, lorsqu'on serre les vis de serrage, pour se déplacer vers l'objet (12) et bloquer cet objet contre l'élément de butée (8).

4 - Dispositif selon la revendication 2, caractérise en ce que le manchon extérieur (5) est lui aussi muni d'une fente (20) et possède une partie cylindrique (16) qui est adaptée pour supporter l'objet (17) et, en réponse au déplacement relatif des manchons (2, 5) servant à bloquer l'objet dans des directions axiale et tangentielle, pour actionner l'objet au moyen d'un moment de force orienté axialement, un épaulement annulaire (18) formé sur l'objet étant alors presse contre le côté de l'élément de butée (8) qui regarde dans le sens qui s'éloigne du manchon extérieur.

5 - Dispositif selon la revendication 2, caractérisé en ce que les éléments de blocage comprennent en outre un contre-manchon possédant un collet axial cylindrique (22) qui peut coulisser sur la partie cylindrique (15) du manchon intérieur (2) pour coopérer avec l'élément de butée (8), et possédant une collerette radiale (23); des garnitures de friction (24, 25) disposées de part et d'autre de l'objet (12); et des moyens de charge élastique (26, 27; 28) adaptés pour être sollicités par le manchon extérieur et adaptés en outre, en réponse au serrage des vis de serrage (7), pour déterminer un blocage tangentiel qui permet un glissement lorsqu'on dépasse une certaine force tangentielle donnée exercée sur l'objet; et en ce que les vis de serrage sont adaptées pour coopérer avec la collerette radiale et pour presser le contre-manchon contre l'élément de butée (8) pour engendrer ledit moment de force.

6 - Dispositif selon la revendication 5, caractérisé en ce que lesdits moyens de charge élastique comprennent au moins une douille de poussée (26) que l'on peut déplacer axialement dans le manchon extérieur, et un ensemble élastique (27) qui peut être interposé entre une garniture de friction (25) et la douille de poussée et qui s'étend à travers la collerette radiale (23) du manchon de poussée, la sollicitation des moyens de charge élastique étant réglée par la douille de poussée.

7 - Dispositif selon la revendication 5, caractérisé en ce que les moyens de charge élastique comprennent des ressorts lames sinusoïdaux (28) dont chacun est serré dans des gorges annulaires (29) ménagées respectivement dans l'élément de butée (8) et dans la collerette radiale (23) du contre-manchon, entre la garniture de friction correspondante (24, 25) et l'élément de butée ou la collerette selon le cas.

*Fig.1*

*Fig.2*

*Fig.3*

Fig.4

Fig.5

Fig.6

Fig.7